Europäisches Patentamt

(19) European Patent Office

Office européen des brevets

(11) Publication number: **0 045 188**
**A1**

## EUROPEAN PATENT APPLICATION

(21) Application number: **81303388.3**

(22) Date of filing: **23.07.81**

(51) Int. Cl.³: **C 03 B 37/08**

---

(30) Priority: **28.07.80 GB 8024612**

(43) Date of publication of application: **03.02.82**
**Bulletin 82/5**

(84) Designated Contracting States: **BE DE FR GB IT NL SE**

(71) Applicant: **NATIONAL RESEARCH DEVELOPMENT CORPORATION, P.O. Box 236 Kingsgate House 66-74 Victoria Street, London SW1E 6SL (GB)**

(72) Inventor: **Loewenstein, Klaus Leopold, Dr., 7 Lime Avenue, Camberley Surrey GU15 2BS (GB)**

(74) Representative: **Hardisty, David Robert et al, BOULT, WADE & TENNANT 27 Furnival street, London EC4A IPQ (GB)**

---

(54) **Method and apparatus for the production of fibres and fibres thereby produced.**

(57) Apparatus for the production of fibres, e.g. glass fibres from an appropriate molten liquid comprises a plate having orifices 1 therein through which the molten liquid flows downwardly to fall away forming fibres 4. Each orifice contains a projecting wire 5 supported by arms 6 which projecting wire lies along the axis of the orifice and projects beyond the outlet opening thereof.

## METHOD AND APPARATUS FOR THE PRODUCTION
## OF FIBRES AND FIBRES THEREBY PRODUCED

The present invention relates to a method and apparatus for the production of fibres from molten material. A principal field in which the invention may be used is the production of glass fibres.

One method for producing fibres is to provide a container of molten material having one or more orifices in the base of the container, which may therefore be constituted by a perforate plate, and to allow the molten material to exude through the orifices so that when a sufficient amount of material has exuded through an orifice the drop so formed falls from the exposed underside of the container trailing a fibre of solidified material which may then be continuously drawn as fresh material exudes through the orifice.

There will be a tendency for the separate drops of material exuding through adjacent orifices to wet the underside of the container and to spread across the underside of the container and join up so that the underside of the container becomes flooded with liquid material. This would prevent the formation of fibres. In order to avoid this, one may provide each orifice with a nozzle projecting from the downstream side of the container. The use of nozzles is in some ways undesirable. The flow rate of liquid through a nozzle will, all other factors being equal, be less than the flow rate through a shorter orifice. The formation of nozzles necessarily involves the use of a considerable extra amount of the material of which the container is formed. In the formation of glass fibres, the container, known as a bushing, is typically an electrically heated platinum furnace of very great cost and it is highly desirable to use as little material in the manufacture of the bushing as possible.

The present invention now provides apparatus for the production of fibres from a molten liquid comprising a plate having orifices therein through which in use the molten liquid passes downwardly to form the fibres, each orifice having a projection extending therefrom in the direction of liquid flow around which the liquid flows in forming a fibre.

The apparatus may be for use in the production of glass fibres from molten glass and will then be constructed of such materials and in such a manner as to be suitable for this particular purpose.

Preferably, the plate is a base plate of a container for the molten liquid provided with means for heating the container. The container may be electrically conductive and the means for heating the container may be means for electrical resistance heating which may employ the passage of electric current through the container itself.

The container may be of platinum or a platinum alloy and may be an electrically heated furnace constructed from one of these materials. Platinum-rhodium alloy is the preferred material for use for making bushings for use in forming glass fibres.

The projection of each orifice may comprise a wire which may extend at least part-way through its respective orifice and project therefrom. Preferably, each projection extends from substantially the centre of the downstream opening of its respective orifice.

The projection may also be of platinum or of a platinum alloy. This would be preferred for the manufacture of glass fibres.

Preferably, the downstream face of the plate is substantially smooth.

The apparatus may further comprise means for producing a flow of cooling air directed toward the downstream openings of the orifices.

The invention includes a method of forming fibres from molten liquid which method comprises passing the molten liquid downwardly through orifices in the base of a container so that the liquid falls from each orifice forming a fibre of solidified material, wherein each orifice has a projection extending therefrom in the direction of liquid flow around which the liquid flows in forming a fibre, which projection, in the case of the fibre formation being

0045188

interrupted, acts as a guide for liquid passing through the orifice and reduces the tendency for the liquid to wet the underside of the container base 2.

The invention also includes fibres produced by a method as described above or using an apparatus as described above including glass fibres.

The invention will now be illustrated by the description of particular embodiments thereof with reference to the accompanying drawings in which:-

Figure 1 shows the orifice of a first prior art apparatus,

Figure 2 shows orifices of a second prior art apparatus,

Figure 3 shows the general arrangement of orifices in the base plate of a bushing of a prior art apparatus,

Figure 4 shows the wetting of the underside of the base plate of the apparatus of Figure 2 which may occur in use,

Figure 5 shows the orifices of an apparatus according to the present invention,

Figure 6 shows the operation of the apparatus of Figure 5,

Figure 7A is a view from below of one orifice of the apparatus of Figure 6,

Figure 7B is a view from below of one orifice of a further apparatus of the invention,

Figure 8 shows orifices of a further embodiment of an apparatus according to the invention, and

Figure 9 shows orifices of further apparatus according to the invention.

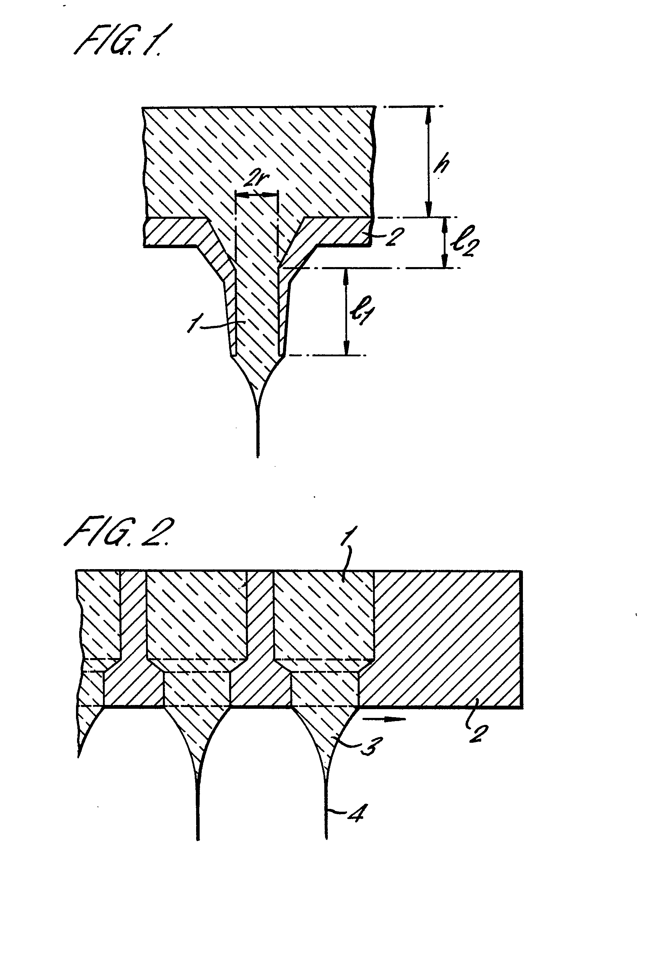

Figure 1 shows a section through one orifice 1 of a bushing for use in forming glass fibres. The bushing is an electrically heated furnace having a base plate 2 containing a multitude of nozzles 1. In use the bushing is filled with liquid glass which is kept molten by heating the bushing by electric resistance heating, the current passing through the platinum bushing itself. Typically, the dimensions of each orifice of a bushing as shown in Figure 1 are in the ranges:-

$$l_1 = 2 - 6 \text{ mm}$$
$$l_2 = 3 - 6 \text{ mm}$$
$$2r = 1 - 2.5 \text{ mm}$$

The rate of flow of liquid, e.g. molten glass, through such a nozzle is given by Poiseuille's equation as

$$F \propto \frac{r^4 h}{\eta\, l}$$

where F is the rate of flow in unit time, r is the radius of the nozzle or orifice bore in its narrowest section, l is the length of this narrowest cylindrical section, h is the height of the glass above the outlet of the nozzle or orifice, and $\eta$ is the viscosity of the glass. From this equation, it follows that, for a given rate of flow, (that is a given output of glass fibre) orifices with a shorter length l will not need so great a bore r. Furthermore, it is generally recognised that the smaller the orifice or nozzle, the closer they may be located one to another.

The size of bushing is therefore governed by the number of nozzles in its base plate and the necessary space between them as well as the need to provide for access during manufacture and use and for ancillary equipment. As a typical example, the base or orifice plate of a bushing such as is shown in Figure 1 operating from a supply of molten glass and provided with 400 nozzles is about 340 mm long and 52 mm wide. The bushing, with sidewalls 50 mm high, terminals for connection to the electrical supply and other facilities contains about 2.1 kg of platinum metal. This, at current costs, has a value of about £15,000.

Attempts have been made to reduce the amount of platinum metal used for a given output of glass fibre. Some success has been achieved in this direction, in the main by constructing bushings provided with more and more nozzles, and dealing at the same time with the related problems of handling the larger number of simultaneuosly drawn glass fibres. Bushings of several thousand nozzles are now in use.

These bushings have necessitated development of new auxiliary equipment for handling the larger bundle of fibres they produce and the reduction in weight of platinum metals employed per unit weight of fibre produced has not been so great as to remove the need for further savings.

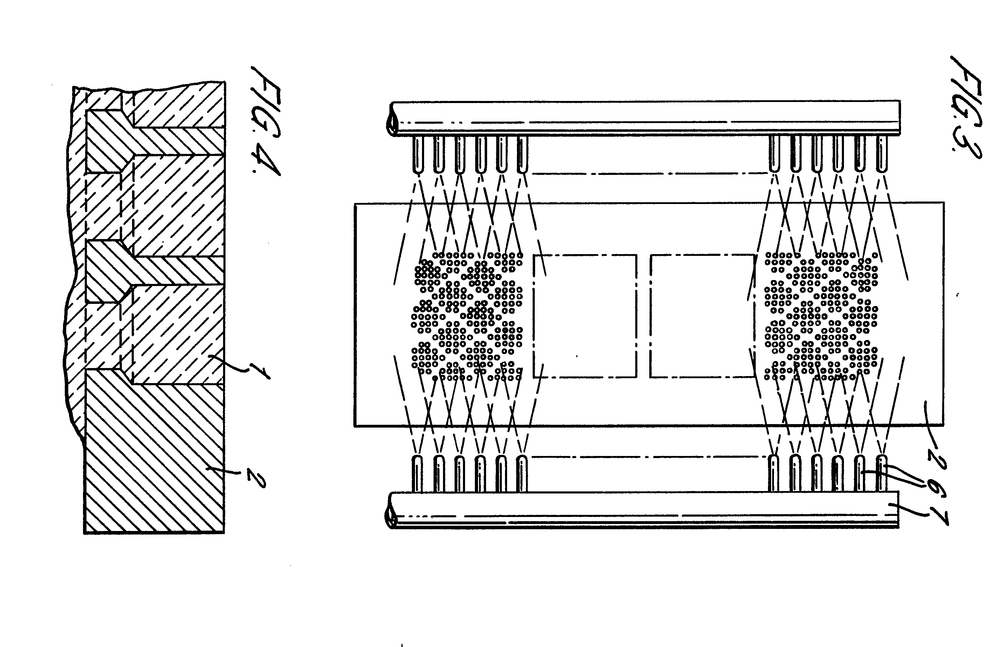

It has been proposed to use bushings in which the orifices are not provided with a nozzle. An example of

0045188

such a prior art bushing is shown in Figure 2 and it will be seen that each orifice 1 opens into a smooth downstream surface of the bushing base plate 2 i.e. no nozzle is provided. A fibre of solidified glass may be drawn continuously from a continuously replenished meniscus of molten glass 3. It was originally proposed that bushings without nozzles should be used in conjunction with a pressurised supply of molten glass to further increase the rate of production of glass fibre. This however has not been put into commercial practice. When using a bushing of the type shown in Figure 2 a flow of cooling air is directed at the outlets of the orifices to accelerate the cooling of glass as the fibres are drawn therefrom. The change from bushings as shown in Figure 1 to bushings of the kind described with reference to Figure 2 has resulted in the reduction of the size of the bushing and a considerable saving in material. A major problem with such bushings as are illustrated by Figure 2 is that they are prone to the flooding of the orifice plate by molten glass when one or more filaments break during the production process.

It is inherent in the industrial process of making glass in a refractory furnace from natural raw materials that impurities or inhomogeneities are occasionally present in the molten glass. Even very small particles in the glass, or inhomogeneities which would go unnoticed in normal glassmaking are sufficient to reduce the flow of glass through one or more nozzles and holes to such a level that the fibre breaks. Additionally, it is possible that some event downstream from the exit of the glass from the bushing, like passage over a guide surface, is defective and causes simultaneous breakage of several fibres which, in turn, can lead to all the fibres breaking. In the case of the traditional bushing shown in Figure 1 this is an undesirable event but not a major problem. By waiting for 30 - 60 seconds, drops of glass will form, one from each nozzle, drop away from the orifice plate, and leave single fibres attached to the nozzles, one to each nozzle. The operator can handle this bundle of fibres and manually restart the fibre forming process.

In the case of the form of bushing shown in Figure 2, such events can lead to major problems due to the tendency of the glass to wet and flow across the underside of the orifice plate and join up with other fibres; in the case of many fibres breaking simultaneously, the whole orifice plate can become flooded with glass. A long period of work by expert operators is then required to restore the bushing to a condition when production can recommence. The flooding is basically due to the low surface tension between platinum alloys and molten glass.

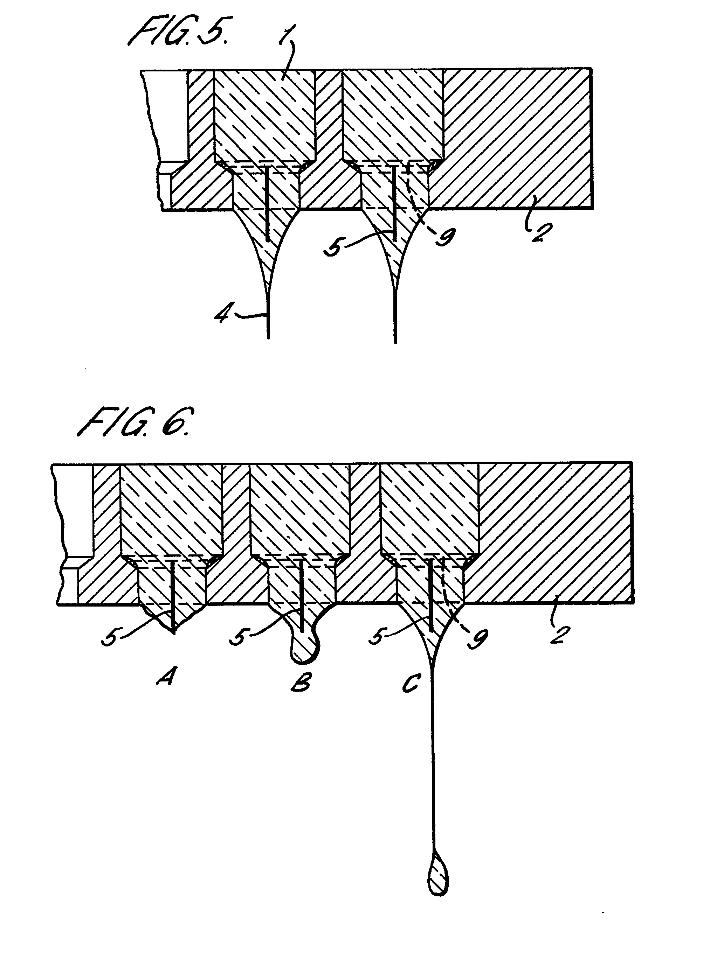

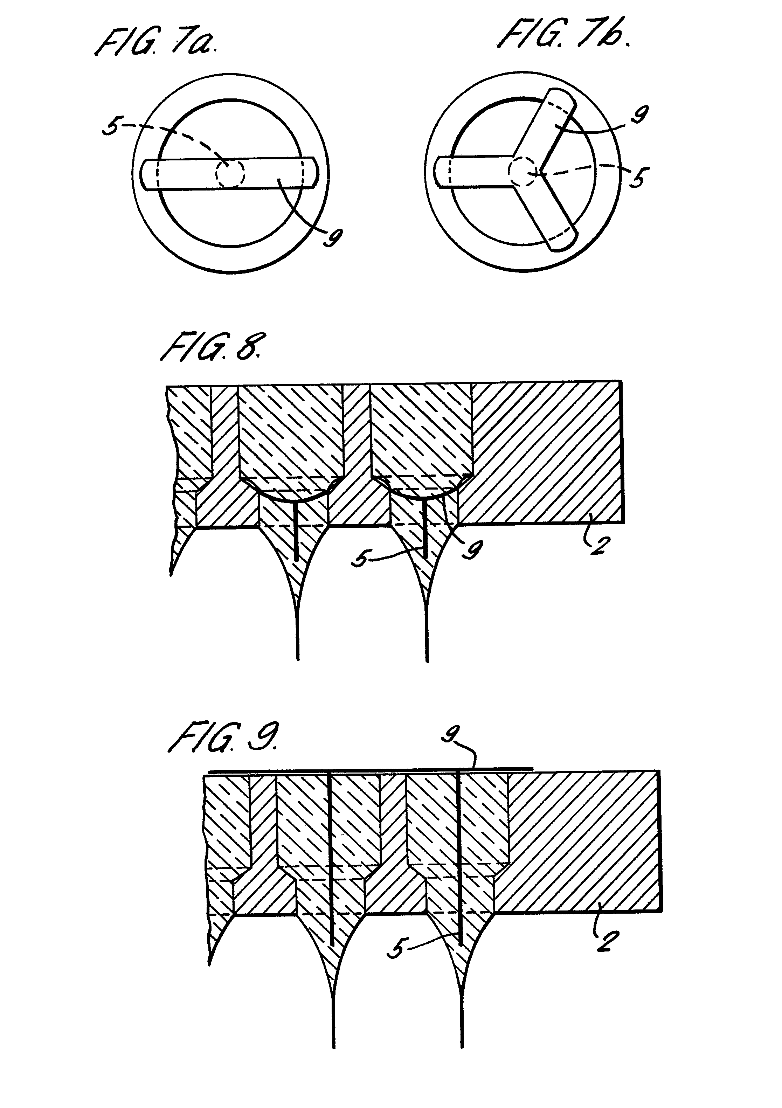

Figure 4 shows the effect of fibre breakage and the flooding of the orifice plate that results therefrom (dotted area).

Figure 3 shows the base plate of a bushing as illustrated in detail in Figure 2. Air blowers 7 provided

0045188

with nozzles 6 direct a cooling flow of air towards the outlets of the orifices. The orifices can be seen to be arranged in groups. This is one method of minimising the consequences of a fibre breakage since the flooding is likely to spread somewhat more slowly between adjacent groups of orifices and between individual orifices within a group.

By contrast Figure 5 shows in cross section a pair of orifices of a bushing according to the present invention. The bushing is generally similar to that shown in Figure 2 except that each orifice is provided with a projection 5 which in Figure 5 is a platinum wire centrally disposed along the axis of each respective orifice and projecting from the downstream opening of the orifice.

In the event of one or more fibres breaking, flooding of the orifice plate by molten glass will often be prevented by the projections 5 which conduct the molten glass away from the orifice plate 2. This process is shown in Figure 6. At orifice A the fibre is broken but glass begins to flow onto the projecting wire 5. At orifice B, a drop of glass is formed which, at orifice C is shown dropping away leaving a fibre being drawn continuously from the meniscus around the wire. This fibre, together with the other fibres, may be gathered manually and attached to mechanical means for attenuation for the production process to continue.

It may be that some mishap will cause the glass to flood the underside of the plate despite the projections - this can occur even when nozzles are used. In this eventuality however, the removal of unwanted glass is facilitated by the fact that, as the glass is removed by manual attenuation, the film of glass on the underside will contract and concentrate onto the projections to which fresh glass flows from within the container and from which it will continue to be drawn.

Using an arrangement similar to that shown in Figure 3, an air flow may be directed at the outlets of the orifices of an apparatus according to the invention to assist in cooling the liquid material being drawn into fibres therethrough.

Figures 7A and 7B illustrate two methods of attaching a projection 5 in the form of a wire so as to lie along the centre line of an orifice in the base place of a bushing. Figure 7A shows the central wire 5 supported by a pair of wire arms 9 extending in opposed radial directions to the walls of the orifice. Figure 7B shows the central wire 5 supported by three radial arms 9 in a similar manner.

Figure 8 shows two orifices in the base plate of a further apparatus according to the invention which generally resembles that of Figure 6 except that the supporting wire arms 9 for the projection 5 are shaped as a catenary whereas in Figure 6 they are shown as being horizontal and straight. Figure 9 shows a similar orifice plate to that shown in Figure 8 but illustrates an alternative placing of the support arms 9 at the top surface of the respective orifice rather than in the bore.

The length by which each projection in an apparatus according to the invention should extend below the downstream surface of the plate in order to prevent wetting of the surface in the event of fibre formation being interrupted, e.g. by an interruption of flow, will depend upon several factors including the nature of the molten liquid, the diameter of the orifice, and the amount and direction of any air flow provided for cooling the liquid as it emerges as fibres. In the case of glass being drawn into fibres, it is preferred that the wire have a length in the range from the radius of the orifice to the diameter of the orifice.

Although each projection is most preferably a single wire lying along the axis of its respective orifice, the use of a plurality of projections, e.g. two in each orifice is permissible and the projections may take form other than wires, e.g. fine tubes. However, it will generally be undesirable to produce any more than the minimum obstruction of each orifice.

CLAIMS

1. Apparatus for the production of fibres from a molten liquid comprising a plate 2 having orifices 1 therein through which in use the molten liquid passes downwardly to form fibres 4, characterised in that each orifice has a projection 5 extending therefrom in the direction of liquid flow around which the liquid flows in forming a fibre.

2. Apparatus as claimed in claim 1 further characterised in that the plate is a base plate of an electrically heated furnace.

3. Apparatus as claimed in claim 1 or claim 2 further characterised in that the plate is of platinum or a platinum alloy.

4. Apparatus as claimed in any preceding claim further characterised in that the projection of each orifice 1 comprises a wire 5.

5. Apparatus as claimed in claim 4 further characterised in that each wire 5 extends at least part way through its respective orifice 1 and projects therefrom.

6. Apparatus as claimed in any preceding claim further characterised in that the projection 5 in each orifice is

- 13 -

0045188

of platinum or a platinum alloy.

7. Apparatus as claimed in any preceding claim further characterised in that the plate 2 has a downstream face which apart from the said projection 5 is substantially smooth into which the orifices open.

8. A method of forming fibres from a molten liquid which method comprises passing the molten liquid downwardly through orifices 1 in the base 2 of a container so that the liquid falls from each orifice 1 forming a fibre 4 of solidified material, characterised in that each orifice 1 has a projection 5 extending therefrom in the direction of liquid flow around which the liquid flows in forming a fibre which projection, in the case of the fibre formation being interrupted, acts as a guide for liquid passing through the orifice and reduces the tendency for the liquid to wet the underside of the container base 2.

9. A method as claimed in claim 8 further characterised in that the molten liquid is glass.

10. Fibres characterised in that they were produced by a method as claimed in claim 8 or claim 9 or using apparatus as claimed in any one of claims 1 to 7.

FIG.1.

$2r$

$h$

$\ell_2$

$\ell_1$

2

1

FIG.2.

1

2

3

4

FIG. 3.

FIG. 4.

FIG.5.

FIG.6.

FIG. 7a.

5

9

FIG. 7b.

9

5

FIG. 8.

5 9 2

FIG. 9.

9

5 2

0045188
Application number
EP 81 30 3388

## European Patent Office

## EUROPEAN SEARCH REPORT

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | GB - A - 511 857 (POLLAK)<br>* The whole patent *<br><br>--<br><br>US - A - 2 783 590 (STALEGO)<br>* Figures 3-5, column 2, lines 53-72; columns 3,4 *<br><br>---- | 1,4,5,<br>7-10<br><br>1,8-10 | C 03 B 37/08 |
| | | | **TECHNICAL FIELDS SEARCHED (Int. Cl.³)**<br><br>C 03 B 37/02<br>37/08<br>37/09<br>37/095 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 20-10-1981 | VAN DEN BOSSCHE |

EPO Form 1503.1 06.78